# EUROPÄISCHE PATENTANMELDUNG

(11) **EP 0 979 936 A2**
(43) Veröffentlichungstag der Anmeldung: **16.02.2000**
(21) Anmeldenummer: 99114384.3
(22) Anmeldetag: 22.07.1999
(51) Int. Cl.: F02D 41/06, F02D 11/10, F02D 41/22

(54) **Verfahren und Vorrichtung zur Ansteuerung einer Leistungsverstelleinrichtung eines Fahrzeugmotors**

(30) Priorität: 10.08.1998 DE 19836059
(71) Anmelder: Mannesmann VDO Aktiengesellschaft, 60388 Frankfurt am Main (DE)
(72) Erfinder: Göhring, Frank, 60318 Frankfurt (DE)
(74) Vertreter: Rassler, Andrea, Dipl.-Phys.

(57) **Zusammenfassung**

Bei elektronischen Systemen zur Leistungsverstellung in Kraftfahrzeugen werden herkömmliche mechanische Gestänge oder Bowdenzüge durch die Übertragung elektrischer Signale ersetzt oder ergänzt. Eine solche elektronische Leistungsverstellvorrichtung beinhaltet eine Steuereinheit (6), die über ein elektrisches Stellglied (8) auf die Leistungsverstelleinrichtung (9) einwirkt. Zur Beeinflussung der Motorleistung ist ein Fahrpedal (5) als Sollwertgeber vorgesehen. In einem Wandler (7) wird die Fahrpedalstellung in ein elektrisches Signal umgewandelt, das der Steuereinheit (6) zugeführt wird. Beim Starten des Fahrzeugs wird eine Fahrberechtigungskontrolle durchgeführt. Erfindungsgemäß kann der Fahrzeugmotor während der Fahrberechtigungskontrolle bereits gestartet werden, jedoch wird die Fahrpedalstellung von der Steuereinheit (6) erst dann berücksichtigt, wenn die Zugangsberechtigungskontrolle positiv abgeschlossen ist. Somit wird sowohl eine sichere Kontrolle der Fahrberechtigung als auch ein komfortables und sicheres Starten des Fahrzeugmotors durch einen berechtigten Fahrer erreicht.

## Beschreibung

Die Erfindung betrifft ein Verfahren zur Ansteuerung einer Leistungsverstelleinrichtung eines Fahrzeugmotors, bei dem der Fahrzeugmotor durch Betätigen eines Zündstartschloßsystems gestartet wird und die Stellung eines Fahrpedals in ein elektrisches Signal umgesetzt sowie das der Stellung des Fahrpedals proportionale Signal einer Steuereinheit zugeführt wird, die aus dem elektrischen Signal der Fahrpedalstellung und weiteren Meßsignalen ein Ausgangssignal zur Ansteuerung der Leistungsverstelleinrichtung erzeugt, sowie eine Vorrichtung zur Durchführung des Verfahrens.

Seit einiger Zeit werden zunehmend mechanische Systeme zur Leistungsverstellung in Fahrzeugen durch elektronische Systeme ersetzt oder ergänzt. Hierbei werden herkömmliche mechanische Gestänge oder Bowdenzüge durch die Übertragung elektrischer Signale substituiert. Ein solches elektronisches Gassystem ist beispielsweise aus der EP 0 050 707 A1 bekannt. Die Leistungsverstelleinrichtung des Fahrzeugmotors ist dort in Form einer Drosselklappe ausgeführt, wobei der Stellantrieb der Drosselklappe von einer Regelelektronik gesteuert wird. Die Regelelektronik erhält als Eingangsgrößen das elektrische Signal eines Fahrpedals (Sollwertgeber) für die Steuerung der Fahrzeuggeschwindigkeit sowie weitere Meßsignale, die für die Leerlaufdrehzahl von Bedeutung sind. Das gesamte System arbeitet somit mit rein elektrischen Verbindungen zwischen den einzelnen Komponenten, wodurch die Störanfälligkeit reduziert wird und Beschränkungen hinsichtlich der Wegstrecke zwischen Fahrpedal, Steuerelektronik und Leistungsverstelleinrichtung aufgehoben sind.

Der zunehmende Einsatz von elektronischen Komponenten im Kraftfahrzeug hat neben dem Ersatz mechanischer Komponenten wie bei der beschriebenen Leistungsverstelleinrichtung auch zum Einsatz völlig neuer Funktionsvorrichtungen geführt. Zu letzteren gehören elektronische Systeme zur Zugangs- oder Fahrberechtigungskontrolle, mit deren Hilfe ein Entwenden des Fahrzeuges verhindert werden soll. In der WO 92/18732 wird eine Vorrichtung beschrieben, die eine Zugangsberechtigungskontrolle durchführt. Diese Vorrichtung enthält ein erstes Teil, das im Fahrzeug angeordnet ist und ein zweites Teil, das von einer Person mitgeführt wird. Zwischen den beiden Teilen findet bidirektional eine Signalübertragung statt. Das von der Person mitzuführende Teil sendet ein kodiertes Signal aus, das von dem im Fahrzeug befindlichen Teil empfangen und dekodiert wird. Erkennt das im Fahrzeug befindliche Teil das Signal, so wird eine Fahrzeugtür entriegelt und die Alarmanlage ausgeschaltet, so daß eine Benutzung des Fahrzeugs möglich ist. Bei diesen Systemen stellt sich das Problem des Abhörens und späteren mißbräuchlichen Benutzens des ausgesendeten Signals durch unberechtigte Dritte mittels geeigneter Vorrichtungen.

Eine weitere Ausgestaltung eines Systems zur Fahrberechtigungskontrolle ist aus der
DE 44 34 587 A1 bekannt. Dort ist ein elektronisches Zündstartschloßsystem mit einem elektronischen Zündstartschloß und einem elektronischen Zündschlüssel beschrieben, wobei der Zündschlüssel mit dem Zündschloß kodierte Signale austauscht. Erst bei positiver Auswertung des übermittelten kodierten Signals wird eine elektromagnetische Sperre entriegelt und der Schlüssel kann zum Starten des Fahrzeugs gedreht werden. Dieses Blockieren des Schlüssels während der Übermittlung und Auswertung der ausgetauschten Signale kann vom Fahrer als störend empfunden werden.

Aufgabe der Erfindung ist es, ein eingangs beschriebenes elektronisches Verfahren zur Ansteuerung einer Leistungsverstelleinrichtung eines Fahrzeugmotors mit einer Fahrberechtigungskontrolle zu kombinieren und zwar derart, daß zum einen eine hohe Sicherheit erzielt wird, zum anderen der Fahrer die Fahrberechtigungskontrolle aber nicht als störend empfindet und der Startvorgang für den berechtigten Fahrer praktisch unverändert gegenüber Fahrzeugen ohne Fahrberechtigungskontrolle erfolgt.

Die Aufgabe wird bei einem gattungsgemäßen Verfahren zur Ansteuerung einer Leistungsverstelleinrichtung eines Fahrzeugmotors dadurch gelöst, daß
- beim Betätigen des Zündstartschloßsystems eine Fahrberechtigungskontrolle gestartet wird,
- während der Fahrberechtigungskontrolle das Ausgangssignal der Steuereinheit ausschließlich aus den weiteren Meßsignalen ohne Berücksichtigung des Signals der Fahrpedalstellung gebildet wird und
- nach positivem Abschluß der Fahrberechtigungskontrolle das Signal der Fahrpedalstellung von der Steuereinheit bei der Bildung des Ausgangssignals berücksichtigt wird oder
- nach negativem Abschluß der Fahrberechtigungskontrolle der Startvorgang von der Steuereinheit abgebrochen wird.

Zur Durchführung des erfindungsgemäßen Verfahrens ist eine Vorrichtung vorgesehen, die ein Fahrpedal, einen Wandler zur Umsetzung der Fahrpedalstellung in ein elektrisches Signal sowie eine Steuereinheit zur Umsetzung des elektrischen Signals der Fahrpedalstellung und weiterer Meßsignale in ein Ausgangssignal zur Ansteuerung einer Leistungsverstelleinrichtung des Fahrzeugmotors beinhaltet, wobei weiterhin Mittel zur Durchführung einer Fahrberechtigungskontrolle vorhanden sind, die mit der Steuereinheit derart verbunden sind, daß während der Fahrberechtigungskonkrolle das Ausgangssignal der Steuereinheit ausschließlich aus den weiteren Meßsignalen ohne Berücksichtigung des Signals der Fahrpedalstellung gebildet wird.

Gemäß besonderer Ausführungsformen der erfindungsgemäßen Vorrichtung ist vorgesehen, daß die Mittel zur Fahrberechtigungskontrolle zumindest teilweise in ein elektronisches Zündstartschloßsystem integriert sind, wobei insbesondere im Zündstartschloßsystem ein drahtloser Austausch kodierter Daten zwischen dem Zündschloß und einem Zündschlüssel erfolgt. Ferner ist vorgesehen, daß zwischen dem Zündschloß und dem Zündschlüssel eine induktive Energieübertragung zur Energieversorgung der im Zündschlüssel integrierten Elektronikkomponenten erfolgt.

Mit dem angegebenen Verfahren bzw. der angegebenen Vorrichtung werden an sich bekannte Fahrberechtigungskontrollsysteme, die häufig auch als elektronische Wegfahrsperren bezeichnet werden, mit ebenfalls an sich bekannten elektronischen Ansteuerungen zur Leistungsverstellung, sogenanntes 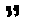 E-Gas", erfindungsgemäß so miteinander kombiniert, daß sowohl eine hohe Sicherheit bei der Fahrberechtigungskontrolle als auch ein komfortables und sicheres Starten des Fahrzeugmotors durch einen berechtigten Fahrer erreicht wird.

Nachfolgend wird die Erfindung anhand der Figuren näher beschrieben.
Es zeigen:
Fig. 1 ein Ablaufdiagramm des erfindungsgemäßen Verfahrens
Fig. 2 ein Blockschaltbild einer Vorrichtung zur Durchführung des Verfahrens

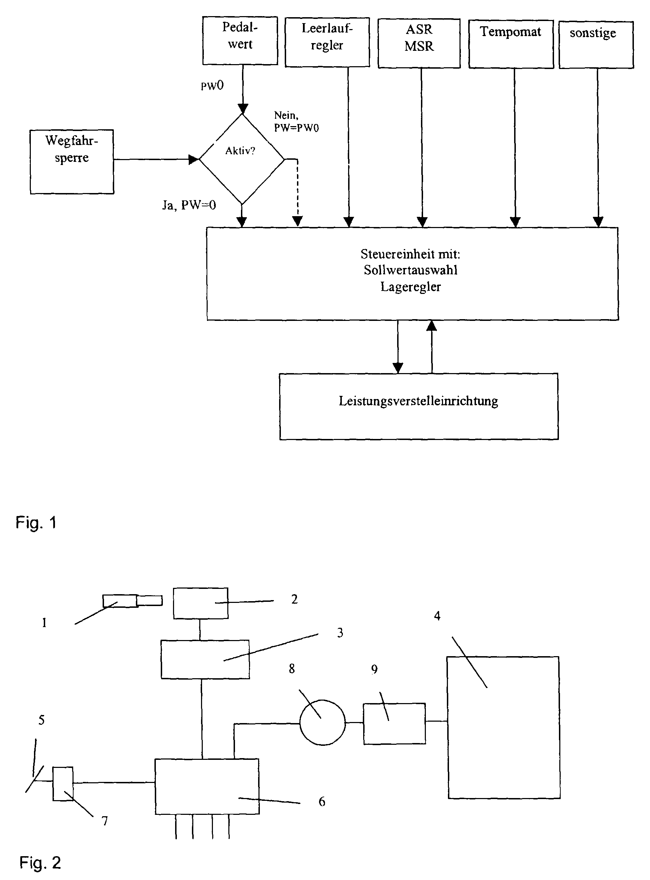

Gemäß dem in Figur 1 dargestellten Ablaufdiagramm werden der Steuereinheit für die Leistungsverstelleinrichtung, bei der es sich um eine Drosselklappe oder um Einspritzventile handeln kann, mehrere Eingangssignale zugeführt. Es handelt sich dabei neben dem elektrischen Signal des Fahrpedals insbesondere um das Signal des Leerlaufreglers, mit dem der Leerlauf des Fahrzeugmotors geregelt wird, Signale einer Antischlupfregelung (ASR), eines automatischen Geschwindigkeitsreglers sowie sonstige für die Leistungsverstellung gegebenenfalls relevante Werte.

Die Steuereinheit beinhaltet sowohl die Sollwertauswahl aus der Vielzahl der genannten Eingangswerte sowie einen Lageregler, der direkt mit dem Stellelement der Leistungsverstelleinrichtung in Wechselwirkung steht. Insoweit handelt es sich um eine bekannte vollelektronische Ansteuerung einer Leistungsverstelleinrichtung eines Kraftfahrzeuges.
Erfindungsgemäß ist nunmehr vorgesehen, daß zusätzlich eine Abfrage der Fahrberechtigung erfolgt, die mit dem Einschalten der Zündung gestartet wird. Ist die Wegfahrsperre noch aktiv, d.h. ist die Fahrberechtigungskontrolle noch nicht abgeschlossen, so wird der Pedalwert bei der Sollwertauswahl nicht berücksichtigt. Der Pedalwert wird in diesem Falle unabhängig von der Stellung des Fahrpedals auf Null gesetzt.

Ein Starten des Motors ist in der Prüfungsphase der Fahrberechtigung bereits möglich, jedoch kann die Motordrehzahl nicht über die Leerlaufdrehzahl hinaus erhöht werden, und ein Wegfahren des Fahrzeuges wird somit noch verhindert. Erst wenn die Fahrberechtigungskontrolle positiv abgeschlossen ist wird die Wegfahrsperre deaktiviert, der Pedalwert bei der Sollwertauswahl berücksichtigt und ein Fahren des Fahrzeuges ermöglicht. Wird die Fahrberechtigungskontrolle dagegen negativ abgeschlossen, so wird der Motor über die Motorelektronik wieder abgeschaltet und der Startvorgang somit abgebrochen.

Fig. 2 zeigt ein Blockschaltbild einer Vorrichtung zur Durchführung des erfindungsgemäßen Verfahrens.

Beabsichtigt eine Person mit dem Fahrzeug zu fahren, so wird in gewohnter Weise der Schlüssel 1 in das Zündschloß 2 eingeführt und die Zündung eingeschaltet. Mit dem Einschalten der Zündung wird die Fahrberechtigungskontrolle gestartet. Hierzu tauscht der Zündschlüssel mit dem Zündschloß kodierte Signale aus. Dazu enthält der Zündschlüssel eine geeignete Elektronik, die einen Kodierer und einen mit dem Kodierer in Verbindung stehenden Sender enthält. Im Zündschloß ist ein Empfänger zum Empfang der vom Zündschlüssel ausgesendeten Signale und ein Dekodierer zum Dekodieren der empfangenen Signale enthalten. Eine Auswerteelektronik 3 wertet die empfangenen und dekodierten Signale aus und gibt bei positivem Prüfergebnis ein entsprechendes Signal an die Steuereinheit 6.

Werden die Signale des Zündschlüssels von der Auswerteelektronik 3 erkannt, bedeutet dies, daß es sich um einen zu dem Zündschloß gehörenden Schlüssel handelt, und die Wegfahrsperre wird deaktiviert.

Zur Beeinflussung der Motorleistung ist ein Fahrpedal 5 als Sollwertgeber vorgesehen, das vom Fahrer betätigt wird. In einem Wandler 7 wird ein zur Fahrpedalstellung proportionales elektrisches Signal erzeugt und an die Steuereinheit 6 geleitet. Die Steuereinheit 6 erhält weitere Eingangssignale von hier nicht eingezeichneten Stellgliedern. Das Ausgangssignal der Steuereinheit 6 wird schließlich an ein elektrischen Stellglied 8 ausgegeben, das auf eine Leistungsverstelleinrichtung 9 einwirkt.

Die Durchführung der Fahrberechtigungskontrolle nimmt nur eine kurze Zeitdauer in Anspruch. Mit Beginn der Fahrberechtigungskontrolle kann der Fahrer aber bereits den Motor 4 in gewohnter Weise starten, wobei dieser im Leerlauf arbeitet, so daß weder eine Komforteinbuße stattfindet noch zusätzliche Kaltstartprobleme dadurch auftreten können, daß der Anlasser bereits dreht. Während der Fahrberechtigungskontrolle ist es dem Fahrer aber nicht möglich, die Motordrehzahl durch Betätigen des Fahrpedals 5 zu erhöhen. Der Motor wird während der Dauer der Fahrberechtigungskontrolle nur mit Leerlaufdrehzahl laufen. Erst nach positivem Abschluß der Fahrberechtigungskontrolle kann die Motordrehzahl durch Betätigen des Fahrpedals 5 erhöht werden, womit sich das Fahrzeug im normalen Fahrbetriebzustand befindet.

Die Festlegung, ob der Pedalwert der Sollwertauswahl in der Steuereinheit zur Verfügung gestellt wird, kann sowohl mittels Hardware als auch mittels Software erfolgen.

Bei hardwaremäßiger Realisierung ist ein in die Steuereinheit integriertes elektronisches Schaltelement vorgesehen, das im Falle eines positiven Abschlusses der Fahrberechtigungskontrolle durch ein Signal von der Auswerteelektronik 3 der Wegfahrsperre durchgeschaltet wird und somit den Pedalwert der Sollwertauswahl zuführt. Die Festlegung über die Berücksichtigung bzw. Nichtberücksichtigung des Pedalwertes bei der Sollwertauswahl kann aber auch rein über eine geeignete Programmierung der Steuereinheit 6 erfolgen. Die Auswerteeinheit 3 kann zudem in der Steuereinheit 6 integriert sein.

Wird während der Fahrberechtigungskontrolle das vom Zündschloß zum Zündschlüssel übermittelte Signal von der Auswerteelektronik 3 nicht erkannt, so wird der Motor über die Steuereinheit 6 abgestellt, um eine unberechtigte Benutzung des Fahrzeugs zu unterbinden. Da der Motor bis zu diesem Zeitpunkt nur für eine kurze Zeit mit Leerlaufdrehzahl läuft, kann das Fahrzeug durch diesen nicht bewegt werden, wodurch die Funktion der Wegfahrsperre gewährleistet ist.

## Patentansprüche

1. Verfahren zur Ansteuerung einer Leistungsverstelleinrichtung eines Fahrzeugmotors, bei dem der Fahrzeugmotor durch Betätigen eines Zündstartschloßsystems gestartet wird und die Stellung eines Fahrpedals in ein elektrisches Signal umgesetzt sowie das der Stellung des Fahrpedals proportionale Signal einer Steuereinheit zugeführt wird, die aus dem elektrischen Signal der Fahrpedalstellung und weiteren Meßsignalen ein Ausgangssignal zur Ansteuerung der Leistungsverstelleinrichtung erzeugt,
dadurch gekennzeichnet, daß
- beim Betätigen des Zündstartschloßsystems eine Fahrberechtigungskontrolle gestartet wird,
- während der Fahrberechtigungskontrolle das Ausgangssignal der Steuereinheit ausschließlich aus den weiteren Meßsignalen ohne Berücksichtigung des Signals der Fahrpedalstellung gebildet wird und
- nach positivem Abschluß der Fahrberechtigungskontrolle das Signal der Fahrpedalstellung von der Steuereinheit bei der Bildung des Ausgangssignals berücksichtigt wird oder
- nach negativem Abschluß der Fahrberechtigungskontrolle der Startvorgang von der Steuereinheit abgebrochen wird.

2. Vorrichtung zur Steuerung der Leistung eines Fahrzeugmotors (4), die ein Fahrpedal (5), einen Wandler (7) zur Umsetzung der Fahrpedalstellung in ein elektrisches Signal sowie eine Steuereinheit (6) zur Umsetzung des elektrischen Signals der Fahrpedalstellung und weiterer Meßsignale in ein Ausgangssignal zur Ansteuerung einer Leistungsverstelleinrichtung (9) des Fahrzeugmotors (4) beinhaltet, dadurch gekennzeichnet, daß weiterhin Mittel (1, 2, 3) zur Durchführung einer Fahrberechtigungskontrolle vorhanden sind, die mit der Steuereinheit (6) derart verbunden sind, daß während der Fahrberechtigungskonkrolle das Ausgangssignal der Steuereinheit (6) ausschließlich aus den weiteren Meßsignalen ohne Berücksichtigung des Signals der Fahrpedalstellung gebildet wird.

3. Vorrichtung nach Anspruch 1, dadurch gekennzeichnet, daß die Mittel zur Fahrberechtigungskontrolle zumindest teilweise in ein Zündstartschloßsystem integriert sind.

4. Vorrichtung nach Anspruch 2, dadurch gekennzeichnet, daß im Zündstartschloßsystem ein drahtloser Austausch codierter Daten zwischen dem Zündschloß (2) und einem Zündschlüssel (1) erfolgt.

5. Vorrichtung nach Anspruch 3, dadurch gekennzeichnet, daß eine induktive Energieübertragung zwischen dem Zündschloß (2) und dem Zündschlüssel (1) erfolgt.
